# FASCICULE DE BREVET EUROPEEN

(11) **EP 1 769 175 B1**
(45) Date de publication et mention de la délivrance du brevet: **16.04.2008**
(21) Numéro de dépôt: 05763932.0
(22) Date de dépôt: 04.07.2005
(51) Int. Cl.: F16J 15/00

(54) **DISPOSITIF D'ETANCHEITE D'UNE MACHINE TOURNANTE**
DICHTUNGSVORRICHTUNG FÜR EINE ROTATIONSMASCHINE
SEALING DEVICE FOR A ROTATING MACHINE

(30) Priorité: 16.07.2004 FR 0407927
(43) Date de publication de la demande: 04.04.2007
(73) Titulaire: THALES, 92200 Neuilly sur Seine (FR)
(72) Inventeur: SKORUCAK, Bela, Thales Intellectual Property, F-94117 Arcueil (FR)
(74) Mandataire: Collet, Alain
(86) Numéro de dépôt international: PCT/EP2005/053172
(87) Numéro de publication internationale: WO 2006/008232

(56) Documents cités:
- US-A- 3 630 529
- US-A- 5 038 631
- US-B1- 6 343 794
- PATENT ABSTRACTS OF JAPAN vol. 004, no. 049 (M-007), 15 avril 1980 (1980-04-15) & JP 55 017722 A (KURODA MITSURU), 7 février 1980 (1980-02-07)

## Description

L'invention concerne un dispositif d'étanchéité d'une machine tournante comportant un arbre tournant par rapport à un carter. L'invention sera décrite en rapport à une machine électrique, moteur ou générateur, permettant la transformation d'énergie électrique en énergie mécanique ou inversement. L'énergie mécanique est véhiculée par la rotation de l'arbre. Il est bien entendu que l'invention n'est pas limitée à une machine électrique et qu'elle peut être mise en oeuvre par exemple pour assurer l'étanchéité de toute machine où un arbre tourne par rapport à un carter, comme par exemple un moteur thermique ou une boîte de vitesse.

Dans le cas d'une machine électrique la transformation d'énergie occasionne des pertes thermiques qu'il est nécessaire de dissiper. Lorsque la puissance de la machine électrique est importante, on prévoit des moyens de refroidissement spécifiques utilisant par exemple la circulation d'un fluide caloporteur tel que par exemple de l'huile. La partie basse du carter forme un réservoir dans lequel le fluide est pompé pour circuler dans des parties à refroidir de la machine électrique. Des enroulements stator et rotor forment par exemple les parties à refroidir. Le fluide, après passage dans ces enroulements, retourne dans la partie basse du carter pour évacuer la chaleur qu'il véhicule par exemple par convection contre la paroi du carter ou dans un échangeur prévu à cet effet.

Il est important de conserver le fluide à l'intérieur du carter et d'éviter les fuites. Pour cela, il est nécessaire d'assurer l'étanchéité des éléments situés à l'intérieur du carter vis-à-vis de l'extérieur. L'invention concerne plus particulièrement l'étanchéité de l'arbre par rapport au carter. Cette étanchéité est difficile à réaliser du fait de l'interface entre un élément mobile, en l'occurrence l'arbre, et un élément fixe, le carter.

Une solution consiste à prévoir un joint fixé à l'élément fixe et frottant sur l'élément mobile. Pour ce faire, on a utilisé des presse-étoupes ou des joints à lèvres. Cette solution présente des inconvénients. Le frottement du joint entraîne l'usure du joint et une perte de rendement.

Une autre solution consiste à prévoir un passage étroit entre l'élément fixe et l'élément mobile. Cette solution supprime le frottement entre l'élément fixe et l'élément mobile. Néanmoins, l'étanchéité n'est pas parfaite et cela occasionne des pertes de fluide qu'il est nécessaire de compenser périodiquement, ce qui entraîne un surcoût d'entretien de la machine.

De plus, dans les deux solutions, il est préférable que le niveau de fluide dans le carter soit plus bas que le joint ou le passage étroit. On comprend bien qu'un niveau de fluide situé au-dessus du joint ou du passage étroit favorise les fuites de fluide. Cette contrainte pose des problèmes particuliers lorsque la machine tournante n'est pas utilisée en poste fixe mais est embarquée par exemple à bord d'un aéronef dont l'incidence peut varier en fonction des conditions de vol. Ceci est également problématique pour un véhicule terrestre subissant des accélérations entraînant par inertie des variations de niveau du fluide dans le carter.

L'invention a pour but de pallier les inconvénients énumérés ci-dessus en proposant un dispositif d'étanchéité entre un arbre tournant et un carter, sans frottement et garantissant l'absence de fuite de fluide contenu dans le carter.

A cet effet, l'invention a pour objet d'améliorer un dispositif d'étanchéité d'une machine tournante comportant un carter contenant un fluide, un arbre tournant par rapport au carter, l'étanchéité étant réalisée entre l'arbre et le carter comportant un premier labyrinthe disposé entre l'arbre et le carter, des ailettes solidaires de l'arbre et disposées dans le premier labyrinthe, les ailettes étant destinées à refouler le fluide pénétrant dans le premier labyrinthe vers l'intérieur du carter, comme décrit dans le breret US-A-5038631.

Cet objet est résolu par le dispositif d'étanchéité d'une machine tournante selon la revendication 1.

Des essais ont montré que même en inclinant la machine tournante de sorte que le niveau de fluide qu'elle contient dépasse la hauteur du dispositif d'étanchéité, aucune fuite n'a été constatée lors du fonctionnement de la machine tournante.

L'invention sera mieux comprise et d'autres avantages apparaîtront à la lecture de la description détaillée d'un mode de réalisation donné à titre d'exemple, description illustrée par le dessin joint dans lequel :
la figure 1 représente l'extrémité d'une machine électrique où l'invention a été mise en oeuvre, la représentation est réalisée en coupe dans un plan contenant l'axe de la machine électrique ;
la figure 2 représente l'extrémité de la machine électrique en coupe par un plan perpendiculaire à celui de la figure1 ;
la figure 3 représente plus en détail un dispositif d'étanchéité conforme à l'invention en coupe dans un plan contenant l'axe de la machine électrique ;
la figure 4 représente un exemple de forme d'ailettes solidaires de l'arbre de la machine électrique en coupe par un plan perpendiculaire à celui de la figure 3.

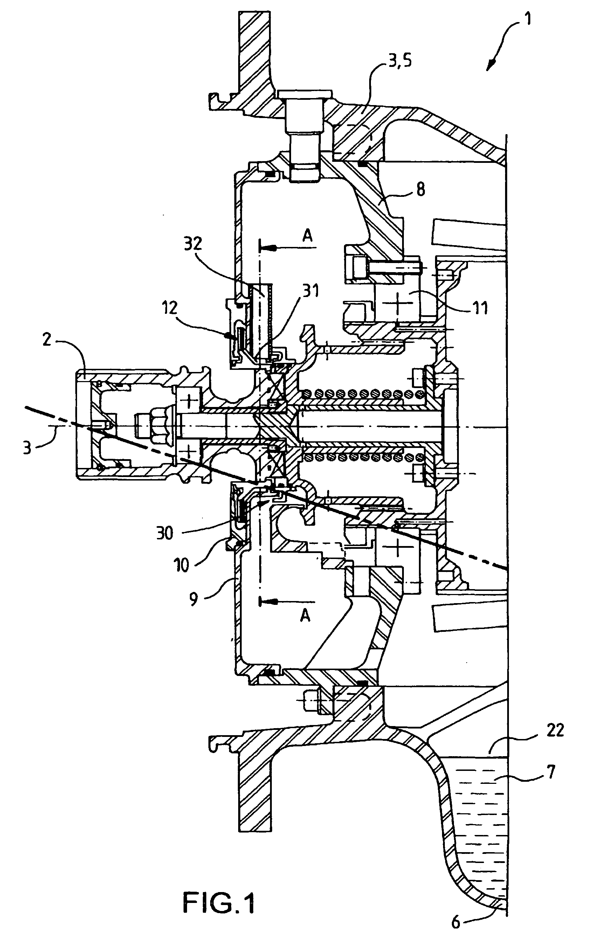

La figure 1 représente le nez d'une machine électrique 1 comportant un arbre 2 tournant autour d'un axe 3 par rapport à un carter 4 formé de plusieurs éléments solidaires : un carter proprement dit 5 dont le fond 6 sert de réservoir à un fluide 7, un palier 8, un couvercle 9, et un capot 10. Il est bien entendu que les différents éléments formant le carter 4 ne sont donnés qu'à titre d'exemple, leur nombre et leur forme dépendent de fonctions nécessaires à la machine électrique 1, fonctions indépendantes de l'invention. Le palier 8 porte un roulement 11 permettant la libre rotation de l'arbre 2 par rapport au carter 4.

La machine électrique 1 comporte un dispositif d'étanchéité au niveau d'une jonction entre l'arbre 2 et le carter 4. Le dispositif d'étanchéité comporte un premier labyrinthe 12 disposé entre l'arbre 2 et le carter 4. Le labyrinthe 12 comporte une paroi mobile en forme de disque 13 ainsi qu'une paroi fixe 14 solidaire du carter 4. Le disque 13, d'axe 3, est solidaire de l'arbre 2. La paroi fixe 14 est formée du couvercle 9 et du capot 10. Entre la paroi fixe 14 et le disque 13 existe un jeu fonctionnel défini de telle sorte que la paroi fixe 14 et le disque 13 ne soit pas en contact. Le labyrinthe 12 forme une chicane entre la paroi fixe 14 et le disque 13. En partant de l'amont vers l'aval d'une éventuelle fuite de fluide 7 qui s'échapperait de la machine électrique 1, cette chicane est formée d'une première couronne 15 d'axe 3 disposée entre le disque 13 et le couvercle 9, d'une zone annulaire 16 située entre le couvercle 9 et le capot 10 à la périphérie du disque 13, et enfin d'une seconde couronne 17 d'axe 3 disposée entre le disque 13 et le capot 10.

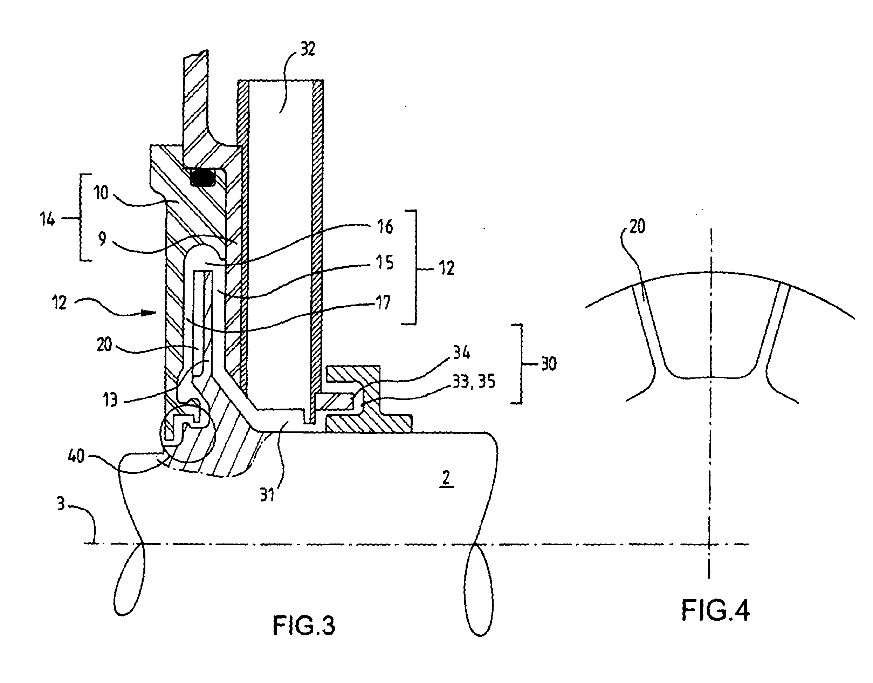

Le dispositif d'étanchéité comporte des ailettes 20 solidaires de l'arbre 2, et plus précisément du disque 13. Les ailettes 20 sont disposées dans le premier labyrinthe 12 et sont destinées à refouler le fluide 7 pénétrant dans le premier labyrinthe 12 vers l'intérieur du carter 4. Les ailettes 20 refoulent le fluide 7 pénétrant dans la première couronne 15 vers la zone annulaire 16. Les ailettes 20 et la zone annulaire 16 forment une pompe centrifuge. Les ailettes 20 ont par exemple la forme de barreaux radiaux solidaires du disque 13. La forme des ailettes est visible sur la figure 4.

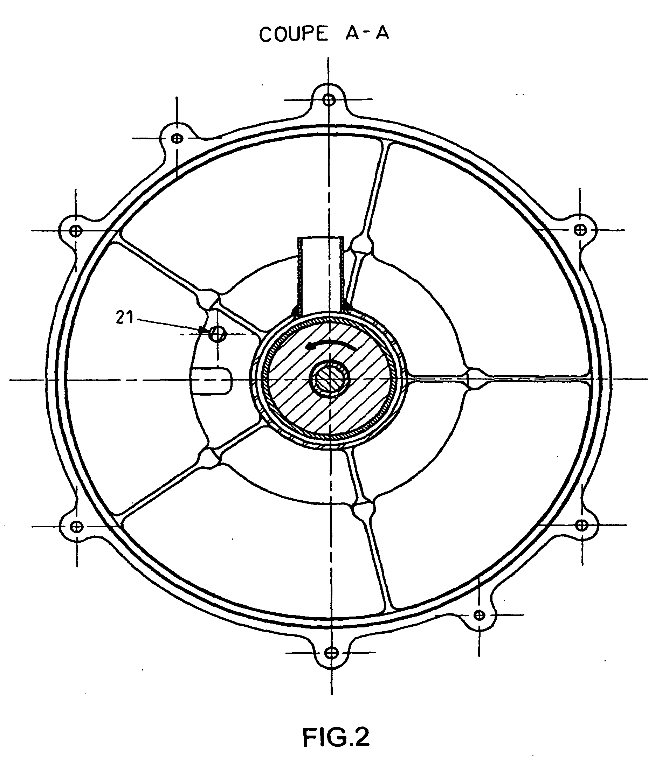

Avantageusement le dispositif d'étanchéité comporte un orifice de refoulement 21 du fluide 7. L'orifice de refoulement 21 est bien visible sur la figure 2. L'orifice de refoulement 21 est situé dans la paroi fixe 14 du premier labyrinthe 12 au voisinage des ailettes 20. Plus précisément, l'orifice de refoulement 21 s'ouvre entre la zone annulaire 16 et l'intérieur du carter 4 au travers du couvercle 9. Il est préférablement situé dans la partie supérieure de la machine électrique 1 bien au-dessus du niveau normal 22 du fluide 7, niveau défini lorsque l'axe 3 est horizontal et que la machine électrique 1 n'est soumise à aucune accélération.

Le dispositif d'étanchéité comporte un second labyrinthe 30 disposé entre l'arbre 2 et le carter 4, une cavité 31 disposée entre le premier labyrinthe 12 et le second labyrinthe 30, ainsi qu'une cheminée 32 permettant l'entrée d'air provenant de l'intérieur du carter 4 dans la cavité 31. En partant de l'amont vers l'aval d'une éventuelle fuite de fluide 7 qui s'échapperait de la machine électrique 1, le fluide 7 traverse tout d'abord le labyrinthe 30 puis la cavité 31 et enfin le labyrinthe 12.

Le labyrinthe 30 compote une paroi mobile 33 solidaire de l'arbre 2 ainsi qu'une paroi fixe 34 solidaire du couvercle 9. La paroi fixe 34 comporte une rainure 35 en forme de couronne d'axe 3. La rainure 35 s'ouvre dans la direction de l'axe 3. La paroi fixe 34 est une portion de cylindre d'axe 3 pénétrant dans la rainure 35.

Entre la paroi fixe 34 et la paroi mobile 33 existe un jeu fonctionnel défini de telle sorte que la paroi fixe 34 et la paroi mobile 33 ne soit pas en contact. Le labyrinthe 30 forme une chicane entre la paroi fixe 34 et la paroi mobile 33.

La cavité 31 est de révolution autour de l'axe 3. Dans la circulation du fluide 7, le labyrinthe 30 a une perte de charge supérieure à celle de la cavité 31. Dans la circulation du fluide 7, la cavité 31 forme une chambre de détente. La rotation des ailettes 20 génère une aspiration dans la cavité 31. La différence de perte de charge entre la cavité 31 et le labyrinthe 30 permet aux ailettes 20 d'aspirer en grande partie de l'air et du fluide 7 en faible quantité. L'air ayant une masse volumique très inférieure à celle d'un fluide 7 tel que par exemple de l'huile, le débit d'air reste modéré. Ceci permet de ne pas encombrer l'orifice de refoulement 21 ni par de l'air ni par le fluide 7.

Des essais ont été réalisés en inclinant la machine électrique 1 de telle sorte que le niveau 36 de fluide 7 baigne l'entrée du labyrinthe 30. Le niveau 36 est représenté en trait mixte sur la figure 1. Dans cette position, aucune fuite de fluide 7 à l'extérieur de la machine électrique 1 n'a été observée.

Avantageusement, le dispositif d'étanchéité comporte une chicane 40 disposée entre le carter 4, plus précisément le capot 10, et l'arbre 2. La chicane 40 évite que des particules présentes dans l'air environnant la machine électrique 1 n'y pénètre. La chicane 40 est située en aval du labyrinthe 12 dans la circulation d'une éventuelle fuite de fluide s'échappant de la machine électrique. En effet, dans le cas de l'utilisation de la machine électrique à bord d'un aéronef, la pression de l'air environnant la machine électrique 1 passe d'environ 1000 hPa au niveau du sol à par exemple 300 hPa en haute altitude. La machine électrique 1 n'étant pas pressurisée, de l'air en sort lorsque l'altitude monte et y pénètre lorsque l'altitude baisse. La chicane 40 permet d'éviter que des particules accompagnant l'air pénétrant dans la machine électrique ne soit aspirées par les ailettes 20.

## Revendications

1. Dispositif d'étanchéité d'une machine tournante comportant un carter (4) contenant un fluide (7), un arbre (2) tournant par rapport au carter (4), l'étanchéité étant réalisée entre l'arbre (2) et le carter (4), comportant un premier labyrinthe (12) disposé entre l'arbre (2) et le carter (4), des ailettes (20) solidaires de l'arbre (2) et disposées dans le premier labyrinthe (12), les ailettes (20) étant destinées à refouler le fluide (7) pénétrant dans le premier labyrinthe (12) vers l'intérieur du carter (4), un second labyrinthe (30) disposé entre l'arbre (2) et le carter (4), une cavité (31) disposée entre le premier labyrinthe (12) et le second labyrinthe (30), **caractérisé en ce qu**'une cheminée (32) permet l'entrée d'air provenant de l'intérieur du carter (4) dans la cavité (31).

2. Dispositif selon la revendication 1, **caractérisé en ce qu'**il comporte un orifice de refoulement (21) du fluide (7), orifice situé dans une paroi fixe (14) du premier labyrinthe (12) au voisinage des ailettes (21).

3. Dispositif selon l'une des revendications précédentes, **caractérisé en ce que** dans la circulation du fluide (7), le second labyrinthe (30) a une perte de charge supérieure à celle de la cavité (31).

4. Dispositif selon l'une des revendications précédentes, **caractérisé en ce que** le fluide (7) comporte de l'huile.

5. Dispositif selon l'une des revendications précédentes, **caractérisé en ce que** la machine tournante est une machine électrique (1).

6. Dispositif selon l'une des revendications précédentes, **caractérisé en ce qu'**il comporte une chicane (40) disposée entre le carter (4) et l'arbre (2), la chicane (40) évitant que des particules présentes dans l'air environnant la machine électrique (1) n'y pénètre.

## Claims

1. Sealing device for a rotating machine comprising a housing (4) containing a fluid (7), a shaft (2) rotating with respect to the housing (4), the sealing being provided between the shaft (2) and the housing (4), comprising a first labyrinth (12) arranged between the shaft (2) and the housing (4), fins (20) secured to the shaft (2) and arranged in the first labyrinth (12), the fins (20) being intended to discharge the fluid (7) entering the first labyrinth (12) towards the inside of the housing (4), and a second labyrinth (30) arranged between the shaft (2) and the housing (4), and a cavity (31) arranged between the first labyrinth (12) and the second labyrinth (30), **characterized in that** a duct (32) allows air from inside the housing (4) to enter the cavity (31).

2. Device according to Claim 1, **characterized in that** it comprises an orifice (21) for discharging the fluid (7), this orifice being situated in a fixed wall (14) of the first labyrinth (12) in the vicinity of the fins (21).

3. Device according to either of the preceding claims, **characterized in that**, in the flow path of the fluid (7), the second labyrinth (30) has a pressure drop greater than that of the cavity (31).

4. Device according to one of the preceding claims, **characterized in that** the fluid (7) comprises oil.

5. Device according to one of the preceding claims, **characterized in that** the rotating machine is an electric machine (1).

6. Device according to one of the preceding claims, **characterized in that** it comprises a baffle (40) arranged between the housing (4) and the shaft (2), the baffle (40) preventing particles present in the air surrounding the electric machine (1) from entering it.

## Patentansprüche

1. Dichtungsvorrichtung für eine Rotationsmaschine, umfassend ein Gehäuse (4), das eine Flüssigkeit (7) enthält, eine Welle (2), die sich im Verhältnis zum Gehäuse (4) dreht, wobei die Dichtigkeit zwischen der Welle (2) und dem Gehäuse (4) hergestellt wird, umfassend ein erstes Labyrinth (12), das zwischen der Welle (2) und dem Gehäuse (4) angeordnet ist, Schaufeln (20), die mit der Welle (2) einstückig sind und in dem ersten Labyrinth (12) angeordnet sind, wobei die Schaufeln (20) dazu gedacht sind, die Flüssigkeit (7), die in das erste Labyrinth (12) eindringt, zum Innern des Gehäuses (4) zurückzudrängen, ein zweites Labyrinth (30), das zwischen der Welle (2) und dem Gehäuse (4) angeordnet ist, eine Vertiefung (31), die zwischen dem ersten Labyrinth (12) und dem zweiten Labyrinth (30) angeordnet ist, **dadurch gekennzeichnet, dass** ein Schacht (32) den Eintritt von Luft aus dem Innern des Gehäuses (4) in die Vertiefung (31) ermöglicht.

2. Vorrichtung nach Anspruch 1, **dadurch gekennzeichnet, dass** sie eine Öffnung zum Zurückdrängen (21) der Flüssigkeit (7) umfasst, wobei die Öffnung sich in einer feststehenden Wand (14) des ersten Labyrinths (12) in der Nähe der Schaufeln (21) befindet.

3. Vorrichtung nach einem der vorhergehenden Ansprüche, **dadurch gekennzeichnet, dass** im Kreislauf der Flüssigkeit (7) das zweite Labyrinth (30) einen höheren Druckverlust aufweist als die Vertiefung (31).

4. Vorrichtung nach einem der vorhergehenden Ansprüche, **dadurch gekennzeichnet, dass** die Flüssigkeit (7) Öl umfasst.

5. Vorrichtung nach einem der vorhergehenden Ansprüche, **dadurch gekennzeichnet, dass** die Rotationsmaschine eine elektrische Maschine (1) ist.

6. Vorrichtung nach einem der vorhergehenden Ansprüche, **dadurch gekennzeichnet, dass** sie eine Ablenkplatte (40) umfasst, die zwischen dem Gehäuse (4) und der Welle (2) angeordnet ist, wobei die Ablenkplatte (40) vermeidet, dass Teilchen, die sich in der Umgebungsluft der elektrischen Maschine (1) befinden, in diese eindringen.
